# EUROPEAN PATENT APPLICATION

(11) **EP 1 667 473 A1**
(43) Date of publication of application: **07.06.2006**
(21) Application number: 04787736.0
(22) Date of filing: 08.09.2004
(51) Int. Cl.: H04Q 7/22, H04Q 7/30, H04L 12/28, G06F 13/00

(54) **COMMUNICATION APPARATUS AND METHOD**

(30) Priority: 09.09.2003 JP 2003316861
(71) Applicant: SONY CORPORATION, Tokyo 141-0001 (JP)
(72) Inventor: NAKANO, Takehiko, Shinagawa-ku, Tokyo 1410001 (JP)
(74) Representative: Horner, David Richard
(86) International application number: PCT/JP2004/013053
(87) International publication number: WO 2005/027546

(57) **Abstract**

The present invention relates to a communication apparatus and method configured to allow content, for which a communication range is limited, to be transmitted properly. A control section 21 has communication suitability determination flags 31 corresponding to terminals available of communicating, and sets 1 to a communication suitability determination flag 31 corresponding to a terminal 11 if the terminal 11 is determined to be able to communicate by a communication suitability determination section 22. The control section 21 also resets the communication suitability determination flag 31 when a move of a terminal 11-1 has been detected by a move detection section 23. The control section 21 transmits the content to the terminal 11, for which the communication suitability determination flag 31 is 1. The present invention is applicable to content distribution apparatus.

## Description

### Technical Field

The present invention relates to a communication apparatus and method, and more particularly, to a communication apparatus and method configured to properly transmit content for which a communication range is limited.

### Background Art

In recent years, as networks (hereinafter described as "WAN (Wide Area Networks)") spanning a large area of public nature, such as the Internet, and local networks (hereinafter described as "LAN (Local Area Networks)") provided in an ordinary home or the like have become widespread, various data communication via these networks is implemented briskly.

As one type of such communication, it may be conceivable to provide content by limiting a communication range. For example, communication is controlled such that content can be exchanged only between terminals (terminals disposed at a short communication distance) connected to a same LAN.

### Disclosure of the Invention

### Problems to be solved by the Invention

By the way, when the communication range is limited in this way, it would be required first to determine whether or not the other party is present within a range that can communicate (e.g., whether or not the other party is connected to the same LAN), and then to transmit content on the basis of the determination result. However, there has been no method of performing such content transmission properly and efficiently in the conventional art.

The present invention has been made in view of such circumstances, and therefore intends to allow content, for which a communication range is limited, to be transmitted properly and efficiently.

### Means for solving the Problems

A communication apparatus of the present invention includes: move determination means for determining that a move of another communication apparatus has occurred, execution means for executing a communication suitability determination process of determining whether or not the another communication apparatus is an apparatus available of communicating with the communication apparatus itself, on the basis of whether or not the another communication apparatus has such a positional relationship to be able to communicate with the communication apparatus itself, and transmission means for, where the communication apparatus itself is to transmit predetermined data to the another communication apparatus, and if the another communication apparatus is already determined to be able to communicate with the communication apparatus itself in the communication suitability determination process executed by the execution means, transmitting the data to the another communication apparatus by deeming a result of the determination made by the communication suitability determination means as being valid, if the move of the another communication apparatus has occurred is not determined by the move determination means.

The communication apparatus further includes detection means for detecting a move of the communication apparatus itself, and the transmission means controls, where the communication apparatus itself is to transmit the data to the another communication apparatus, and if the move of the communication apparatus itself has been detected by the detection means, the communication suitability determination means to execute the communication suitability determination process again, and transmits the predetermined data to the another communication apparatus on the basis of a result of the determination.

The move determination means can determine whether or not the move of the another communication apparatus has occurred on the basis of a result of a detection made by the detection means of the another communication apparatus.

The detection means monitors a connection of the communication apparatus itself with an external power supply, and can detect the move of the communication apparatus itself from disconnection of the connection.

The detection means monitors a communication connection of the communication apparatus itself with the another communication apparatus, and can detect the move of the communication apparatus itself from disconnection of the communication connection.

The communication suitability determination process is a process of determining whether or not the another communication apparatus is an apparatus available of communicating with the communication apparatus itself on the basis of a response time of the another communication apparatus to a predetermined command.

The communication suitability determination process is a process of determining whether or not the another communication apparatus is an apparatus available of communicating with the communication apparatus itself on the basis of whether or not the another communication apparatus can receive a designated broadcast or a communication signal.

A communication method of the present invention includes: a move determination step of determining that a move of another communication apparatus has occurred, an execution step of executing a communication suitability determination process of determining whether or not the another communication apparatus is an apparatus available of communicating with a communication apparatus itself, on the basis of whether or not the another communication apparatus has such a positional relationship to be able to communicate with the communication apparatus itself, and a transmission step of, where the communication apparatus itself is to transmit predetermined data to the another communication apparatus, and if the another communication apparatus is already determined to be able to communicate with the communication apparatus itself in the communication suitability determination process executed in the execution step, transmitting the data to the another communication apparatus by deeming a result of the determination made in the communication suitability determination step as being valid, if the move of the another communication apparatus has occurred is determined in the move determination step.

In the communication apparatus and the communication method of the present invention, it is determined that a move of another communication apparatus has occurred, and it is determined whether or not such another communication apparatus is an apparatus available of communicating with a communication apparatus itself on the basis of whether or not such another communication apparatus is in such a positional relationship to be able to communicate with the communication apparatus itself. Where the communication apparatus itself is to transmit predetermined data to such another communication apparatus, and if it has already been determined in the communication suitability determination process that such another communication apparatus is an apparatus available of communicating with the communication apparatus itself, the data is transmitted to such another communication apparatus with a result of the communication suitability determination being deemed to be valid, unless it is determined that the move of such another communication apparatus has occurred.

### Effect of the Invention

According to the present invention, content for which a communication range is limited can be transmitted properly and efficiently.

### Brief Description of Drawings

[Fig. 1] A diagram showing a configuration example of an information communication system utilizing terminals 11 to which the present invention is applied.
[Fig. 2] A block diagram showing a configuration example of a terminal 11 of Fig. 1.
[Fig. 3] A flowchart for explaining an operation of the terminal 11 of Fig. 1.
[Fig. 4] A flowchart for explaining processing of steps S3 and S24 of Fig. 3.
[Fig. 5] A flowchart for explaining another operation of the terminal 11 of Fig. 1.
[Fig. 6] A flowchart for explaining processing of steps S75 and S94 of Fig. 5.
[Fig. 7] A block diagram showing another configuration example of the terminal 11 of Fig. 1.

### Description of Reference Numerals

11...terminal, 21...control section, 22...communication suitability determination section, 23...move detection section, 24...content management section, 25...power supply section, 25A...plug, 51..AC power supply, 61...broadcast reception section

### Best Modes for Carrying Out the Invention

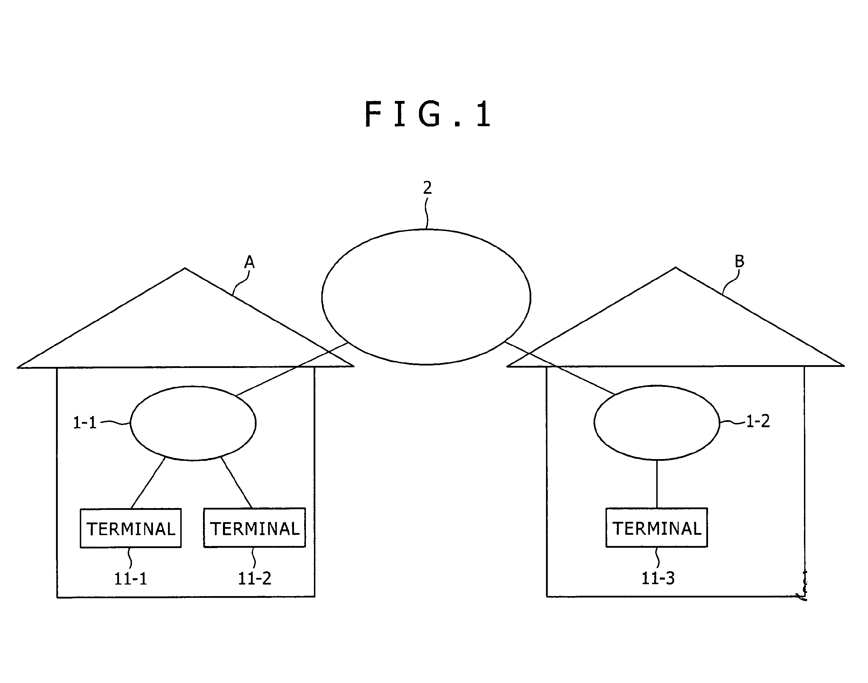

Fig. 1 shows a configuration example of an information communication system including terminals 11 to which the present invention is applied.

LANs 1-1, 1-2 (hereinafter referred to as "LAN 1" as a unit, unless required to be individually distinguished, and this is applied similarly to other cases as well) are interconnected via a WAN 2 represented by the Internet.

The LAN 1-1 is provided in a home A, and is of a size usable by family members (specific individuals) of the home. Terminals 11-1 and 11-2, such as personal computers, AV equipment or the like, are connected to the LAN 1-1 via a switching hub (not shown). The connection between the terminals 11-1 and 11-2 is implemented by a high-speed interface such as, e.g., an Ethernet (R) (100BASE-TX). The terminals 11-1 and 11-2 are connectable to the LAN 1-2 via the LAN 1-1 and the WAN 2.

The LAN 1-2 is provided in a home B, and is of a size usable by family members (specific individuals) of the home, similarly to the LAN 1-1. A terminal 11-3 is connected to the LAN 1-2.

The terminals 11 can exchange predetermined content for which a communication range is limited. For example, if the communication range is limited to the same LAN 1, a terminal 11 determines whether a reception side terminal 11 is connected to the LAN 1 to which the terminal itself is connected, and performs transmission of the content on the basis of a result of the determination. Moreover, for content which can be distributed only to a predetermined area, a terminal 11 determines whether or not a reception side terminal 11 exists within that area, and performs transmission of the content on the basis of a result of the determination.

Note that communication control in this manner is applicable to content distribution business handling, e.g., distribution of content, such as films, to a specific area first, and to other areas later.

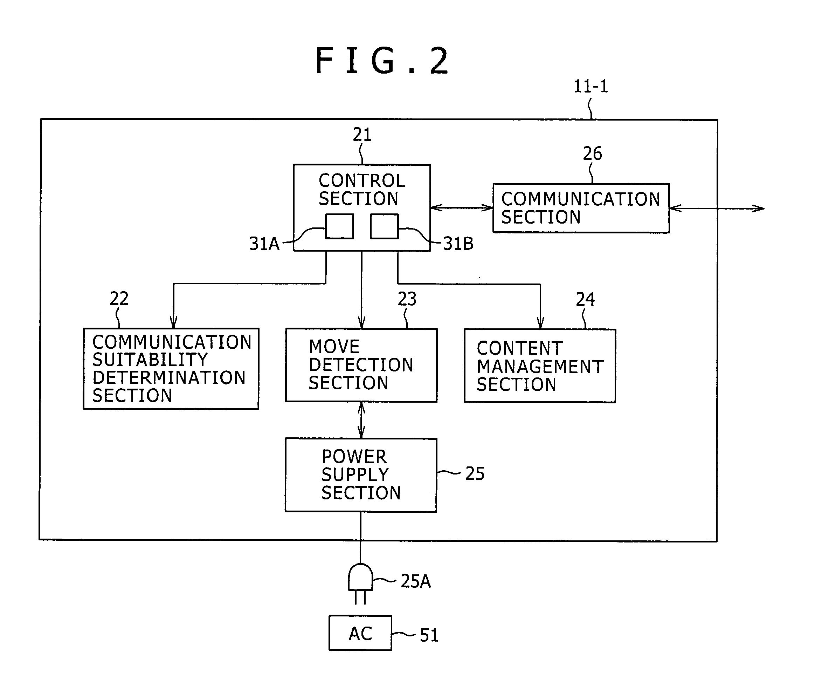

Fig. 2 shows a configuration example of a portion of the terminal 11-1 relevant to the present invention.

Where the terminal 11-1 is to transmit content for which a communication range is limited, to, e.g., a terminal 11-2 or 11-3, a communication suitability determination section 22 determines whether or not the reception side terminal 11 is within the communication range, by communicating with the reception side terminal 11 via a communication section 26 as later described. And by utilizing a result of the determination, the communication suitability determination section 22 determines whether or not the reception side terminal 11 is a terminal 11 available of communicating for the content.

The communication suitability determination section 22 also determines that the transmission side terminal 11 is a terminal 11 available of communicating for the content, when, e.g., the terminal 11-2 or 11-3 has received the content for which the communication range is limited.

A move detection section 23 detects a move of the terminal 11-1.

Specifically, where a plug 25A connected to an external AC power supply 51 is disconnected from the AC power supply 51, the terminal 11-1 may likely be moved to a different location. Thus, the move detection section 23 checks a connection between the terminal 11-1 and the AC power supply 51 via a power supply section 25 for supplying necessary power to various parts, and detects a move of the terminal 11-1 from disconnection of the connection.

Moreover, instead of monitoring the power supply section 25, the move detection section 23 may check, via the communication section 26, a communication connection with a terminal 11 determined to be able to communicate by the communication suitability determination section 22, and may detect a move of the terminal 11-1 from disconnection of the connection. Note that the check of the communication connection is performed, in a case of communication using a predetermined bias voltage, by detecting a change of the voltage, and in a case of communication exchanging a predetermined signal periodically, by detecting the presence/absence or the like of the signal. The check may also be performed by periodically checking communication suitability.

A content management section 24 stores content to be transmitted to a reception side terminal 11, and content transmitted from a transmission side terminal 11.

Note that the content management section 24 may be formed of a broadcast tuner for receiving broadcasts as content to be transmitted to other terminals 11, and a reproduction apparatus for reproducing recording media having content for transmission to other terminals 11 recorded thereon.

The communication section 26 is connected to the LAN 1-1, to communicate with the terminal 11-2 within the same LAN 1-1, or with the terminal 11-3 connected to a different LAN 1-2 via the WAN 2.

A control section 21 has, e.g., communication suitability determination flags 31 corresponding to the terminals 11-2, 11-3. A flag 31A is a communication suitability determination flag 31 corresponding to the terminal 11-2, and a flag 31B is a communication suitability determination flag 31 corresponding to the terminal 11-3. Note that the communication suitability determination flags 31 are formed of a volatile memory.

The control section 21 sets 1 to a communication suitability determination flag 31 corresponding to a reception side or transmission side terminal 11, where the terminal 11 is a terminal 11 available of communicating. That is, a communication suitability determination flag 31 to which 1 is set means that the terminal 11 corresponding thereto is a terminal 11 available of communicating with the terminal 11-1.

The control section 21 also resets the communication suitability determination flag 31 when a move of the terminal 11-1 has been detected by the move detection section 23. The reason is that a determination made by the communication suitability determination section 22 as to whether or not a terminal 11 as a reception side or a transmission side is a terminal 11 available of communicating is based on a communication distance between the terminal 11-1 and these terminal 11, i.e., on their latest positional relationship, and thus that when the terminal 11-1 has been moved, a determination previously made is useless.

Since the terminals 11-2 and 11-3 have a configuration similar to the configuration shown in Fig. 2, similarly to the terminal 11-1, their description and depiction in the drawings will be omitted.

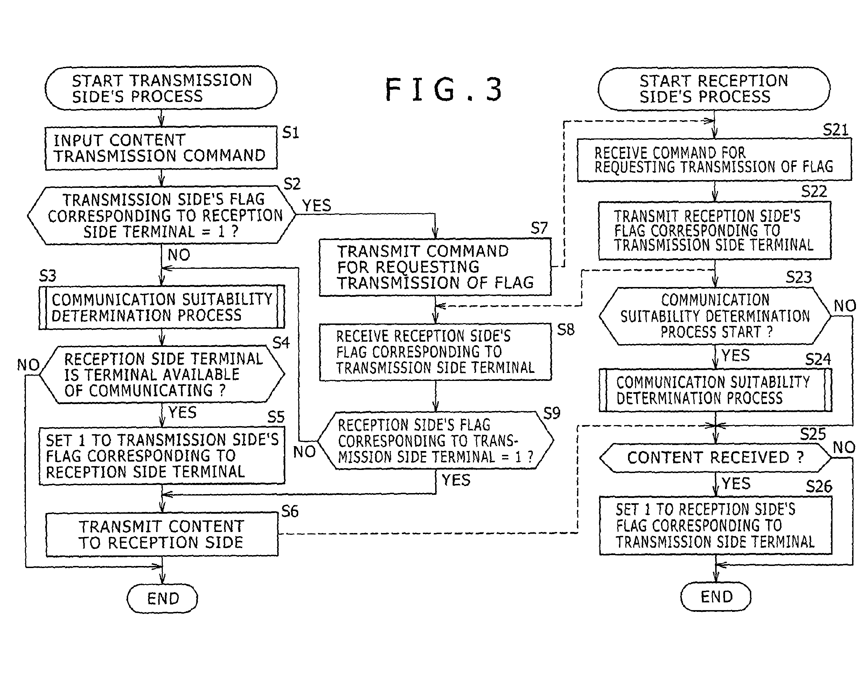

Referring next to a flowchart of Fig. 3, an operation of the terminal 11 in a case of transmitting content for which a communication range is limited will be described.

When the control section 21 of a transmission side terminal 11 receives, in step S1, an input of a content transmission command from, e.g., an operating section, not shown, it proceeds to step S2.

In step S2, the control section 21 of the transmission side terminal 11 determines whether or not 1 is set to a communication suitability determination flag 31 corresponding to a reception side terminal 11, and proceeds to step S3 if determining that 1 is not set.

In step S3, the control section 21 of the transmission side terminal 11 executes a process of determining whether or not the reception side terminal 11 is a terminal 11 available of communicating, as later described, and, in step S4, determines whether or not the reception side terminal 11 is a terminal 11 available of communicating on the basis of a result of the determination.

In step S4, if it is determined that the reception side terminal 11 is a terminal 11 available of communicating, the control section 21 of the transmission side terminal 11 proceeds to step S5 to set 1 to the communication suitability determination flag 31 corresponding to the reception side terminal 11.

Next in step S6, the control section 21 of the transmission side terminal 11 controls the communication section 26 to transmit predetermined content stored in the content management section 24, to the reception side terminal 11. When it is determined in step S4 that the reception side terminal 11 is not a terminal 11 available of communicating, steps 5, 6 are skipped. That is, the process is terminated with the content not being transmitted.

If it is determined in step S2 that 1 is set to the communication suitability determination flag 31 corresponding to the reception side terminal 11, the control section 21 of the transmission side terminal 11 proceeds to step S7 to control the communication section 26 to transmit a command for requesting transmission of contents of a communication suitability determination flag 31 of the reception side terminal 11 corresponding to the transmission side terminal 11, to the reception side terminal 11.

In step S8, the control section 21 of the transmission side terminal 11 receives, via the communication section 26, the contents of the communication suitability determination flag 31 of the reception side terminal 11 corresponding to the transmission side terminal 11, transmitted thereto from the reception side terminal 11, and determines, in step S9, whether it is 1 or not.

When it is determined in step S9 that 1 is set to the communication suitability determination flag 31 of the reception side terminal 11 corresponding to the transmission side terminal 11, the control section 21 of the transmission side terminal 11 proceeds to step S6 to control the communication section 26 to transmit the predetermined content stored in the content management section 24, to the reception side terminal 11.

The fact that 1 is set to the communication suitability determination flag 31 of the transmission side terminal 11 corresponding to the reception side terminal 11 (step S2) means that a communication suitability determination process (step S3) has already been completed, and thus that the reception side terminal 11 is determined to be a terminal available of communicating. Also, the fact that 1 is set to the communication suitability determination flag 31 of the reception side terminal 11 corresponding to the transmission side terminal 11 (step S9) means that the reception side terminal 11 has not been moved since the completion of the communication suitability determination process, and thus that the determination that the reception side terminal 11 is a terminal available of communicating is still valid. Therefore, in this case, the communication suitability determination process is not executed (i.e., steps S3 to S5 are skipped), and transmission of the content is performed (step S6).

On the other hand, when it is determined in step S9 that the communication suitability determination flag 31 of the reception side terminal 11 corresponding to the transmission side terminal 11 is not 1, the control section 21 of the transmission side terminal 11 proceeds to step S3 to execute the communication suitability determination process as to the reception side terminal 11.

When the communication suitability determination flag 31 of the reception side terminal 11 corresponding to the transmission side terminal 11 is not 1 (step S9), this means that the reception side terminal 11 has been moved (more precisely, this means that the reception side terminal 11 might have been moved). Therefore, in this case, the communication suitability determination process as to the reception side terminal 11 is executed again in step S3.

As mentioned above, it is configured to detect a move of a terminal 11, and unless a move of the terminal 11 has occurred, it is deemed that a result of a communication suitability determination once made is valid, whereby transmission of content is performed. Therefore, content can be transmitted properly, without performing communication suitability determination every time communication is to be implemented.

Referring to the flowchart of Fig. 3, an operation of the terminal 11 in a case of receiving content will be described next.

When a control section 21 of the reception side terminal 11 receives, in step S21, the command (step S7) for requesting transmission of the communication suitability determination flag 31 of the reception side terminal 11 corresponding to the transmission side terminal 11, transmitted thereto from the transmission side terminal 11, the control section 21 of the reception side terminal 11 transmits, in step S22, the contents of the flag 31, to the transmission side terminal 11 via a communication section 26.

Note that where a communication suitability determination flag 31 is to be transmitted, it may be configured, in order to prevent tampering of the flag 31, such that the contents of the communication suitability determination flag 31 are encrypted with a secret key shared between the transmission side terminal 11 and the reception side terminal 11, or such that a hash value with a key for the contents of the communication suitability determination flag 31 is transmitted together with the contents of the communication suitability determination flag 31. In other cases also, such anti-tampering measures may be taken for the transmission from the transmission side terminal 11 and the reception side terminal 11, accordingly.

Next in step S23, the control section 21 of the reception side terminal 11 determines whether or not the communication suitability determination process (step S3) is started by the transmission side terminal 11. If it is determined that the process is started, the control section 21 of the reception side terminal 11 proceeds to step S24 to execute the communication suitability determination process so as to correspond to the execution of the process by the transmission side terminal 11, as later described.

When it is determined in step S23 that the communication suitability determination process is not started by the transmission side terminal 11, or when the communication suitability determination process is started in step S24, the control section 21 of the reception side terminal 11 proceeds to step S25 to determine whether or not the content from the transmission side terminal 11 is received, and proceeds to step S26 if determining that the content is received.

Since the fact that the content is transmitted from the transmission side terminal 11 in step S26 means that communication is possible with the transmission side terminal 11, the control section 21 of the reception side terminal 11 sets 1 to the communication suitability determination flag 31 of the reception side terminal 11 corresponding to the transmission side terminal 11, after which it terminates the process.

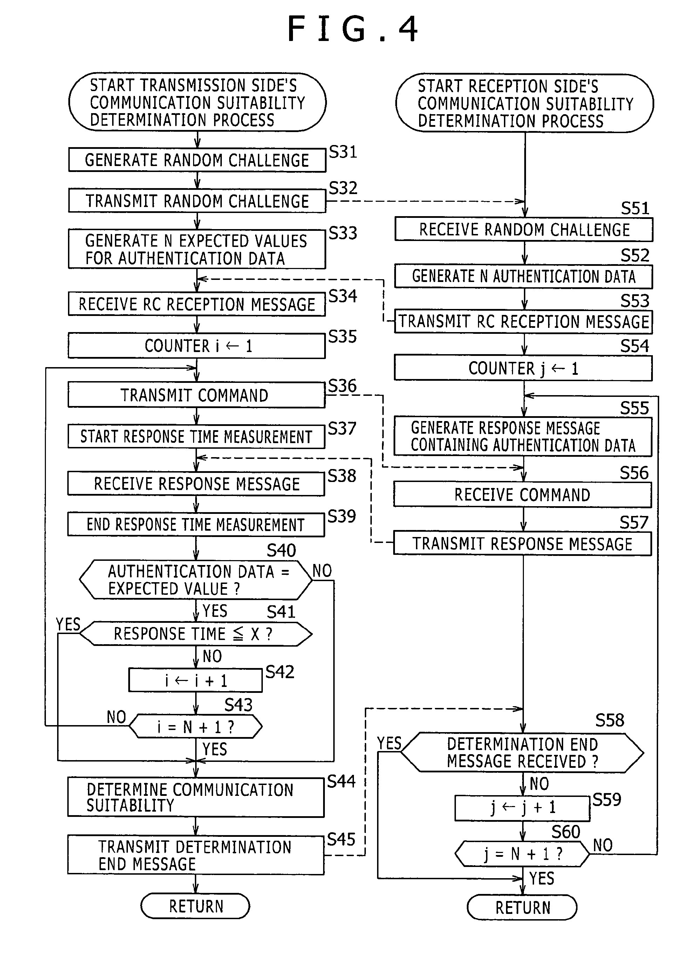

Referring next to a flowchart of Fig. 4, an operation of the transmission side terminal 11 in a case of executing step S3 of Fig. 3 will be described. Note here that the transmission side terminal 11 determines its positional relationship with the reception side terminal 11 on the basis of a reception side response time to a predetermined command, and determines whether or not the reception side terminal 11 is a terminal available of communicating on the basis of a result of the determination.

In step S31, the communication suitability determination section 22 of the transmission side terminal 11 generates a random challenge, and in step S32, transmits it to the reception side terminal 11 via the communication section 26.

Next in step S33, the communication suitability determination section 22 also subjects the generated random challenge to a hashing process with a key to generate an expected value for authentication data to be generated by the reception side terminal 11.

Note that in this example, the communication suitability determination section 22 transmits a response requesting command as many as N times (N=1, 2, ...) at the maximum, in order to determine whether or not data transmission is possible. Thus, N expected values for authentication data corresponding to the N response requesting commands that can be transmitted are generated here.

The N expected values can be generated as follows. For example, the random challenge is first subjected to a hashing process with a key, and then the hashed data obtained is divided into a plurality of data items. The N expected values can be generated from such plurality of data items thus obtained by the division.

In step S34, the communication suitability determination section 22 receives an RC reception message (step S53), transmitted thereto from the reception side terminal 11 as later described, via the communication section 26. The RC reception message indicates that the reception side terminal 11 has received the random challenge transmitted in step S32.

In step S35, the communication suitability determination section 22 initially sets 1 to a counter i which indicates where a response requesting command occurs (in a transmission sequence of response requesting commands).

Next in step S36, the communication suitability determination section 22 transmits a response requesting command to the reception side terminal 11 via the communication section 26, and in step S37, starts measuring a response time. Note that the communication suitability determination section 22 has a built-in timer, not shown, in this case, and activates the timer to start measuring the response time.

In step S38, the communication suitability determination section 22 receives, via the communication section 26, a response message, transmitted thereto from the reception side terminal 11 as later described, as a response to the response requesting command transmitted in step S36, and in step S39, terminates the response time measurement. That is, a time measured during the time measurement which is started in step S37 and terminated in step S39 equals the response time of the reception side terminal 11.

In step S40, the communication suitability determination section 22 determines whether or not authentication data incorporated in the response message agrees with an expected value for the authentication data (specifically, an expected value corresponding to a response requesting command transmitted in a sequence number indicated by the counter i (hereinafter referred to as "a response requesting command transmitted as an i-th command)"). If it is determined that they agree with each other, the communication suitability determination section 22 authenticates the reception side terminal 11 to be a genuine terminal in the information communication system, and then proceeds to step 541.

In step S41, the communication suitability determination section 22 determines whether or not the response time of the reception side terminal 11 corresponding to a response requesting command transmitted as an i-th command exceeds a predetermined time X. The time X is a communication time required between terminals 11 connected to the same LAN 1. That is, if the response time exceeds the time X, the reception side terminal 11 is connected to a different LAN 1 from the transmission side terminal 11. If the response time does not exceed the time X (including a case where the response time = the time X), it can be determined that they are connected to the same LAN 1 (their positional relationship can be determined).

If it is determined in step S41 that the response time exceeds the time X, the communication suitability determination section 22 proceeds to step S42 to increment the counter i by 1.

In step S43, the communication suitability determination section 22 determines whether or not the counter i = N + 1. If it is determined that the counter i is not equal to N + 1, the communication suitability determination section 22 returns to step S36 after a predetermined time elapses.

Where it is determined in step S40 that the reception side terminal 11 is not a genuine device in the present information communication system, and if it is determined in step S41 that the response time corresponding to a response requesting command transmitted as an i-th command does not exceed the time X (it is determined that the reception side terminal 11 is a genuine device in the present information communication system, and that, e.g., it is connected to the same LAN 1 as the transmission side terminal 11), or if it is determined in step S43 that the counter i = N + 1 (when the response requesting command has been transmitted N times), then the communication suitability determination section 22 proceeds to step S44 to determine whether or not the reception side terminal 11 is a terminal 11 available of communicating on the basis of the corresponding processing results.

Thereafter, in step S45, the communication suitability determination section 22 transmits a message (hereinafter referred to "determination end message") indicating that the transmission suitability determination is terminated, to the reception side terminal 11 via the communication section 26. Then, the transmission suitability determination process by the transmission side terminal 11 is terminated.

Referring to the flowchart of Fig. 4, an operation of the reception side terminal 11 in a case of executing step S24 of Fig. 3 will be described next.

In step S51, the communication suitability determination section 22 of the reception side terminal 11 receives the random challenge (step S32) transmitted thereto from the transmission destination terminal 11, via the communication section 26. In step S52, the communication suitability determination section 22 subjects the random challenge received to a hashing process with a key similar to the hashing process with a key (step S33) in the transmission side terminal 11, to generate the authentication data.

Note that a maximum of N response requesting commands can be received in this example, and thus that N items of authentication data for comparison (step S40) with expected values corresponding to the N response requesting commands (step S40) are generated.

When the authentication data is generated in this way, in step S53, the communication suitability determination section 22 transmits the RC reception message to the transmission side terminal 11 via the communication section 26.

In step S54, the communication suitability determination section 22 initially sets 1 to a counter j which indicates where a response requesting command now to be received occurs in a sequence, and in step S55, generates a response message incorporating therein authentication data corresponding to a response requesting command to be received in a sequence number indicated by the counter j (hereinafter referred to as "a response requesting command to be received as a j-th command).

Next in step 556, the communication suitability determination section 22 receives the response requesting command (step S36) transmitted thereto from the transmission destination terminal 11 via the communication section 26, after which, in step S57, transmits the response message incorporating therein the authentication data generated in step S55 and corresponding to the response requesting command to be received as the j-th command, to the transmission side terminal 11 via the communication section 26. As a result, a comparison is made between the authentication data corresponding to the response requesting command received as the j-th command (transmitted as the i-th command) and the expected value of the response requesting command transmitted as the i-th command (received as the j-th command), at the transmission side terminal 11 (in step S40).

In step S58, the communication suitability determination section 22 of the reception side terminal 11 determines whether or not the determination end message (step S45) transmitted thereto from the transmission side terminal 11 is received, and proceeds to step S59 if determining that the message is not received within a predetermined time. In step S59, the communication suitability determination section 22 increments the counter j by 1, and, in step S60, determines whether nor not the counter j = N + 1.

When it is determined in step S60 that the counter j is not equal to N + 1 (i.e., when the response requesting command has not been received N times), the communication suitability determination section 22 returns to step S55, to execute this and subsequent steps on a response requesting command to be received next.

When the determination end message is received in step S58, or it is determined in step S60 that the counter j = N + 1 (i.e., when the response requesting command has been received N times), the communication suitability determination section 22 of the reception side terminal 11 terminates the communication suitability determination process.

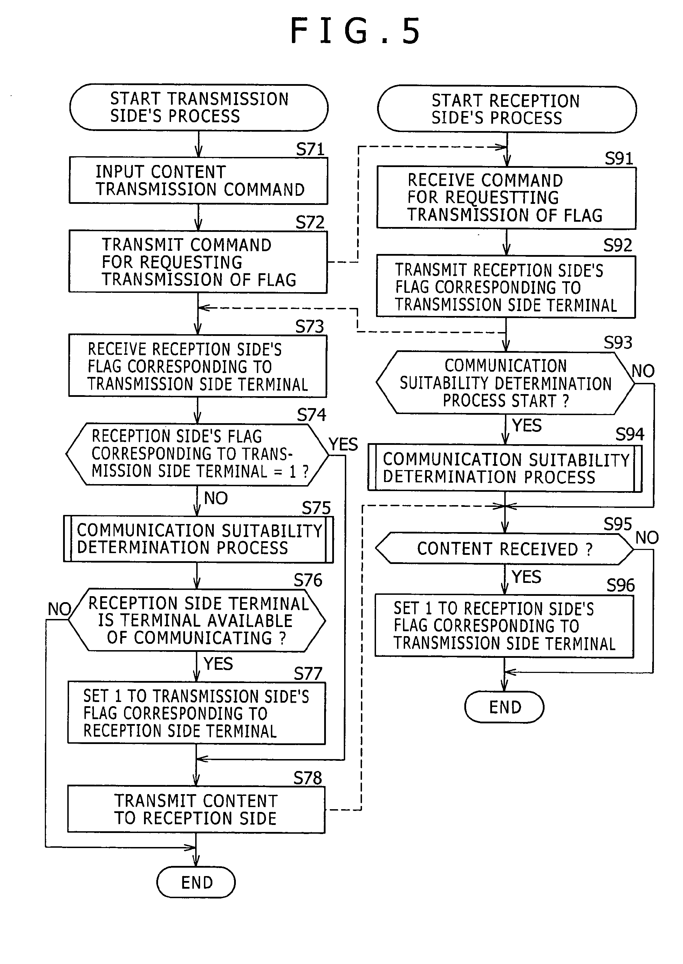

Referring next to a flowchart of Fig. 5, another operation of the terminal 11 in a case of transmitting content for which a communication range is limited will be described. In this example, it is supposed that the transmission side terminal 11 is fixed to a certain location, and thus cannot move. That is, in this case, no determination is made as to whether or not a move of the communication terminal itself has occurred, as in step S2 of Fig. 3.

When the control section 21 of the transmission side terminal 11 receives an input of a content transmission command through, e.g., the operating section, not shown, in step S71, the control section 21 controls the communication section 26 to transmit a command for requesting transmission of contents of the communication suitability determination fang 31 of the reception side terminal 11 corresponding to the transmission side terminal 11, to the reception side terminal 11, in step S72.

In step S73, the control section 21 of the transmission side terminal 11 receives the contents of the communication suitability determination flag 31 of the reception side terminal 11 corresponding to the transmission side terminal 11, transmitted thereto from the reception side terminal 11, via the communication section 26, and in step 574, determines whether it is 1 or not.

When it is determined in step S74 that the communication suitability determination flag 31 of the reception side terminal 11 corresponding to the transmission side terminal 11 is not 1, the control section 21 proceeds to step S75 to determine whether or not the reception side terminal 11 is a terminal available of communicating as later described.

Next in step S76, the control section 21 of the transmission side terminal 11 determines whether or not the reception side terminal 11 is a terminal 11 available of communicating on the basis of a result of the determination in step 575, and proceeds to step S77 if the reception side terminal 11 is determined to be a terminal available of communicating.

In step S77, the control section 21 of the transmission side terminal 11 sets 1 to the communication suitability determination flag 31 corresponding to the reception side terminal 11.

Next in step S78, the control section 21 of the transmission side terminal 11 controls the communication section 26 to transmit predetermined content stored in the content management section 24, to the reception side terminal 11.

If it is determined in step S76 that the reception side terminal 11 is not a terminal 11 available of communicating, steps S77, S78 are skipped to terminate the process.

If it is determined in step S74 that the communication suitability determination flag 31 of the reception side terminal 11 corresponding to the transmission side terminal 11 is 1, the control section 11, skipping steps S75 to S77, proceeds to step S78 to transmit the predetermined content to the reception side terminal.

The fact that 1 is set to the communication suitability determination flag 31 of the reception side terminal 11 corresponding to the transmission side terminal 11 means that a communication suitability determination process has already been completed, and that the reception side terminal 11 is determined to be a terminal 11 available of communicating. Additionally, it means that the reception side terminal 11 has not been moved since the completion of the communication suitability determination process, and thus that the determination that the reception side terminal 11 is a terminal 11 available of communicating is still valid. Consequently, the communication suitability determination is not performed in this case (steps S75 to S77 are skipped), and the content is thus transmitted (step S78).

Note that the operation of the reception side terminal 11 which corresponds to the operation of the transmission side terminal 11 mentioned above is similar to the case of Fig. 3 except for later-described step 594. Therefore, a description thereof will be omitted.

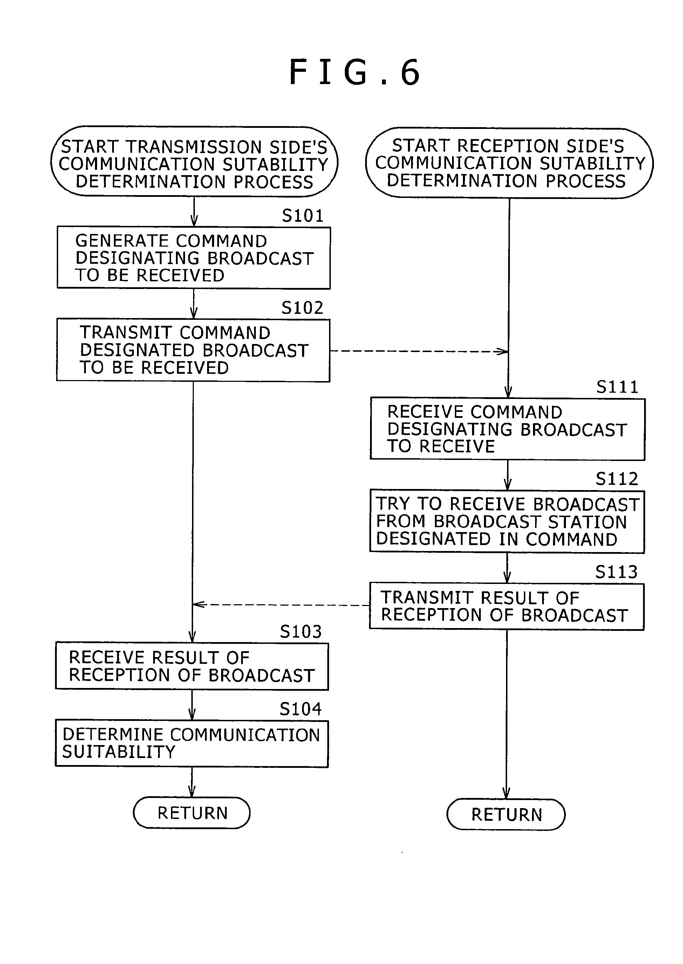

Referring next to a flowchart of Fig. 6, an operation of the transmission side terminal 11 in a case of executing step S75 of Fig. 5 will be described. Here, the transmission side terminal 11 designates a broadcast station which the reception side terminal 11 can tune in to if the reception side terminal is present in an area covered by the broadcast station, and it is determined whether or not the reception side terminal 11 is a terminal available of communicating on the basis of whether or not the reception side terminal 11 was able to receive a broadcast from the broadcast station.

In step S101, the control section 21 of the transmission side terminal 11 generates a command designating a broadcast station which the reception side terminal 11 can tune in to if the reception side terminal 11 is present in an area covered by the broadcast station, and in step S102, transmits the command to the reception side terminal 11 via the communication section 26.

In step S103, the control section 21 of the transmission side terminal 11 receives a result of the reception of the broadcast from the broadcast station designated in the command transmitted in step S102, transmitted thereto from the reception side terminal 11.

In step S104, the control section 21 of the transmission side terminal 11 determines whether or not the reception side terminal 11 is a terminal 11 available of communicating on the basis of the result of the reception of the broadcast received in step S103. That is, if the reception side terminal 11 was able to receive the broadcast from the designated broadcast station properly, the reception side terminal 11 is present in the area where the broadcast is receivable, and thus the reception side terminal 11 is determined to be a terminal 11 available of communicating. On the other hand, if the reception side terminal 11 cannot receive the broadcast from the designated broadcast station, the reception side terminal 11 is not present in the area where the broadcast is receivable, and thus it is determined that the reception side terminal 11 is not a terminal 11 available of communicating.

Note that whether or not the broadcast has been received properly is determined on the basis of whether or not, e.g., a reception signal conforms to a format specified for broadcasting, and may also be determined on the basis of whether or not a broadcast can be descrambled if the broadcast is scrambled.

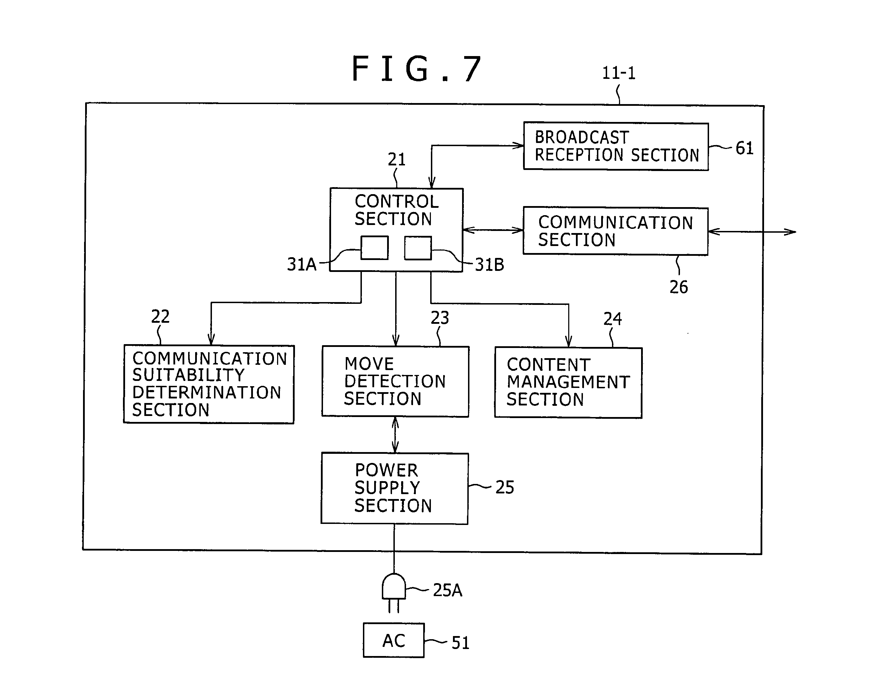

Referring to the flowchart of Fig. 6, an operation of the reception side terminal 11 in a case of executing step S94 of Fig. 5 will be described next. In this case, the reception side terminal 11 is provided with a broadcast reception section 61 for receiving broadcasts, as shown in Fig. 7.

In step S111, the control section 21 of the reception side terminal 11 receives the command designating the predetermined broadcast station, transmitted thereto from the transmission side terminal 11, via the communication section 26, and in step S112, tries to receive the broadcast from the broadcast station designated in the command.

In step S113, the control section 21 of the reception side terminal 11 transmits a result of the reception tried in step S112, to the transmission side terminal 11 via the communication section 26.

Note that in the foregoing, the case where the reception side terminal 11 tries to receive a broadcast from a predetermined broadcast station has been described. However, the present invention is not limited to cases of broadcasting, but may also be applicable to cases where some kind of communication is utilized.

## Claims

1. A communication apparatus **characterized by** comprising:
move determination means for determining that a move of another communication apparatus has occurred;
execution means for executing a communication suitability determination process of determining whether or not the another communication apparatus is an apparatus available of communicating with the communication apparatus itself, on the basis of whether or not the another communication apparatus has a positional relationship to be able to communicate with the communication apparatus itself; and
transmission means for, where the communication apparatus itself is to transmit predetermined data to the another communication apparatus, and if the another communication apparatus is determined to be able to communicate with the communication apparatus itself already in the communication suitability determination process executed by the execution means, transmitting the data to the another communication apparatus by deeming a result of the determination made by the communication suitability determination means as being valid, if the move of the another communication apparatus has occurred is not determined by the move determination means.

2. The communication apparatus according to Claim 1, **characterized by** further comprising:
detection means for detecting a move of the communication apparatus itself,
wherein where the data is transmitted to the another communication apparatus, and if the move of the communication apparatus itself is detected by the detection means, the transmission means controls the communication suitability determination means to execute the communication suitability determination process again, and transmits the predetermined data to the another communication apparatus on the basis of a result of the determination.

3. The communication apparatus according to Claim 2, **characterized in that**
the move determination means determines whether or not the move of the another communication apparatus has occurred on the basis of a result of a detection made by the detection means of the another communication apparatus.

4. The communication apparatus according to Claim 2, **characterized in that**
the detection means monitors a connection of the communication apparatus itself with an external power supply, and detects the move of the communication apparatus itself from disconnection of the connection.

5. The communication apparatus according to Claim 2, **characterized in that**
the detection means monitors a communication connection of the communication apparatus itself with the another communication apparatus, and detects the move of the communication apparatus itself from disconnection of the communication connection.

6. The communication apparatus according to Claim 1, **characterized in that**
the communication suitability determination process is a process of determining whether or not the another communication apparatus is an apparatus available of communicating with the communication apparatus itself on the basis of a response time of the another communication apparatus to a predetermined command.

7. The communication apparatus according to Claim 1, **characterized in that**
the communication suitability determination process is a process of determining whether or not the another communication apparatus is an apparatus available of communicating with the communication apparatus itself on the basis of whether or not the another communication apparatus is able to receive a designated broadcast or a communication signal.

8. A communication method **characterized by** comprising:
a move determination step of determining that a move of another communication apparatus has occurred;
an execution step of executing a communication suitability determination process of determining whether or not the another communication apparatus is an apparatus available of communicating with a communication apparatus itself, on the basis of whether or not the another communication apparatus has a positional relationship to be able to communicate with the communication apparatus itself; and
a transmission step of, where the communication apparatus itself is to transmit predetermined data to the another communication apparatus, and if the another communication apparatus is determined to be able to communicate with the communication apparatus itself already in the communication suitability determination process executed in the execution step, transmitting the data to the another communication apparatus by deeming a result of the determination made in the communication suitability determination step as being valid, and if the move of the another communication apparatus has occurred is not determined in the move determination step.

## Amended claims

### Amended claims under Art. 19.1 PCT

**1.** (As amended) A communication apparatus for transmitting content for which a communication range is limited, to another communication apparatus via a local network, comprising:
management means for managing the content;
communication suitability determination means for transmitting data for generating authentication data for the another communication apparatus and a response requesting command for requesting return of the authentication data generated on the basis of the data as a response message, to the another communication apparatus, determining whether or not the another communication apparatus is an apparatus available of communicating, on the basis of a response time from the transmission of the response requesting command to reception of the response message corresponding to the response requesting command and of the authentication data incorporated into the response message, and storing determination result information indicating a result of the determination;
transmission control means for transmitting the content managed by the content management means to the another communication apparatus on the basis of the determination result information stored in the communication suitability determination means; and
power supply condition detection means for detecting whether an AC power supply plug of the communication apparatus is plugged in or out,
the communication apparatus **characterized in that**:
the transmission control means, when transmitting the content to the another communication apparatus and if the determination result information indicates that the another communication apparatus is not an apparatus available of communicating, causes the communication suitability determination means to make the determination, and transmits the content to the another communication apparatus on the basis of a result of the determination, and if the determination result information indicates that the another communication apparatus is an apparatus available of communicating, acquires determination result information which is managed by the another communication apparatus and which indicates that the communication apparatus is or is not an apparatus available of communicating with the another communication apparatus, and transmits the content to the another communication apparatus on the basis of the acquired determination result information, and
rewrites the determination result information to indicate that the another communication apparatus is not an apparatus available of communicating, if a change of the power supply condition has been detected by the power supply condition detection means.

**2.** (Cancelled)

**3.** (Cancelled)

**4.** (Cancelled)

**5.** (Cancelled)

**6.** (Cancelled)

**7.** (Cancelled)

**8.** (As amended) A communication method for a communication apparatus that transmits content for which a communication range is limited, to another communication apparatus via a local network, comprising:
a management step of managing the content;
a communication suitability determination step of transmitting data for generating authentication data for the another communication apparatus and a response requesting command for requesting return of the authentication data generated on the basis of the data as a response message, to the another communication apparatus, determining whether or not the another communication apparatus is an apparatus available of communicating, on the basis of a response time from the transmission of the response requesting command to reception of the response message corresponding to the response requesting command and of the authentication data incorporated into the response message, and storing determination result information indicating a result of the determination;
a transmission control step of transmitting the content managed in the content management step to the another communication apparatus on the basis of the determination result information stored in the communication suitability determination step; and
a power supply condition detection step of detecting whether an AC power supply plug of the communication apparatus is plugged in or out,
the communication method **characterized in that**:
the transmission control step, when transmitting the content to the another communication apparatus and if the determination result information indicates that the another communication apparatus is not an apparatus available of communicating, causes the communication suitability determination step to make the determination, and transmits the content to the another communication apparatus on the basis of a result of the determination, and if the determination result information indicates that the another communication apparatus is an apparatus available of communicating, acquires determination result information which is managed by the another communication apparatus and which indicates that the communication apparatus is or is not an apparatus available of communicating with the another communication apparatus, and transmits the content to the another communication apparatus on the basis of the acquired determination result information, and
rewrites the determination result information to indicate that the another communication apparatus is not an apparatus available of communicating, if a change of the power supply condition has been detected in the power supply condition detection step.

Statement under Art. 19.1 PCT
Claims 1 and 8 made it clear, on the basis of Fig. 3 and the disclosure corresponding thereto in the Description, particularly, on pages 6 and 7 thereof (pages 16 to 20 in English Description), that a communication apparatus makes a determination of whether or not another communication apparatus is an apparatus available of communicating, on the basis of a response time and authentication data, and also stores determination result information indicative of a result of the determination, and, where the communication apparatus is to transmit content to the another communication apparatus, and if the determination result information indicates that the another communication apparatus is not an apparatus available of communicating, the communication apparatus makes another determination based on the response time and the authentication data, whereas if the determination result information indicates that the another communication apparatus is an apparatus available of communicating, the communication apparatus acquires determination result information which is managed by the another communication apparatus and which indicates that the communication apparatus is or is not an apparatus available of communicating with the another apparatus, and transmits the content to the another communication apparatus on the basis of the acquired determination result information, and further detects a change of a connected condition of an AC power supply plug, and if the change of the power supply condition has been detected, the communication apparatus rewrites the determination result information to indicate that the another communication apparatus is not an apparatus available of communicating.

This distinctive structure is disclosed in none of the cited documents.

For example, Japanese Patent Application Publication No. 2001-127783 discloses a communication source computer, which determines whether or not the communication source computer is connectable with a communication destination computer on the basis of a notice about supply of power or connection with a network from the communication destination computer, for storage in a connection information table, and transmits data, if it has been able to determine that the communication destination computer is connectable therewith at the time of its transmission of the data. Additionally, it is also disclosed that contents of the connection information table are reset at the time of activation of the communication source computer by supply of power.

Furthermore, Japanese Patent Application Publication No. HEI5-276184 discloses a technique in which a connection of LAN equipment is determined on the basis of a response time to transmission of a TDR signal to the LAN equipment.

Furthermore, Japanese Patent Application Publication No. 2002-165205 discloses a technique in which a receiving terminal is determined to be in an area for providing information on the basis of a broadcast station, to distribute the information, such as related banner ads.

However, none of the cited documents discloses that, particularly, if the determination result information indicates that the another communication apparatus is an apparatus available of communicating, the communication apparatus acquires determination result information which is managed by the another communication apparatus and which indicates that the communication apparatus is or is not an apparatus available of communicating with the another communication apparatus, and transmits the content to the another communication apparatus on the basis of the acquired determination result information.

Therefore, it is not considered that a person skilled in the art could have easily made the present invention even by independently applying any of the inventions disclosed in the cited documents, much less by aggregating these inventions.

In the present invention, even where the determination result information indicates that the another communication apparatus is an apparatus available of communicating, and, e.g., if the another communication apparatus is once disconnected from the local network and if the determination result information managed by the another communication apparatus indicates that the communication apparatus is not an apparatus available of communicating with the another communication apparatus, it is configured such that neither the determination based on the response data and the authentication data is made again nor is transmission of the content performed, whereby transmission of the content can be performed more securely. Furthermore, in the present invention, where the determination result indicates that the another communication is an apparatus available of communicating, and, e.g., if the another communication apparatus is not disconnected from the local network and if the determination result information managed by the another communication apparatus indicates that the communication apparatus is an apparatus available of communicating with the another communication apparatus, the communication apparatus transmits the content to the another communication apparatus by deeming that the stored determination result information is valid, whereby transmission of the content can be performed efficiently.
